# EUROPEAN PATENT APPLICATION

(11) **EP 2 071 382 A1**
(43) Date of publication of application: **17.06.2009**
(21) Application number: 07122875.3
(22) Date of filing: 11.12.2007
(51) Int. Cl.: G02B 23/14, G02B 6/34, G02B 23/10, G02B 25/00, G03B 13/02, G02B 27/01

(54) **Optical arrangement for coupling two different image sources comprising a diffractive optical beam guide**

(71) Applicant: Wings Aktiebolag, 402 21 Göteborg (SE)
(72) Inventor: Witte, Stefan, 426 76, VÄSTRA FRÖLUNDA (SE)
(74) Representative: Edlund, Fabian

(57) **Abstract**

The present invention relates to an optical arrangement (100), comprising a viewfinder (118) for receiving an eye of the user; and a waveguide (102) comprising a first in-coupling interface connected to an out-coupling interface of a first image module (104) providing an overview of a scene, a second in-coupling interface connected to an out-coupling interface of a second image module (106) providing an enlarged view of the scene, and an out-coupling interface connected to the viewfinder (118), wherein light emitted by said first and second images sources (104, 106) are diffracted by the respective in-coupling interfaces of the waveguide (102), propagated through the waveguide (102) via total internal reflection, and diffracted out of the out-coupling interface of the waveguide (102) and into the viewfinder (118), and wherein one of the first and the second image module (104, 106) are activated at a time, thereby allowing a user of the optical arrangement (100) to selectively switch the view provided through the viewfinder (118) between the overview of the scene provided by the first image module (104) and the enlarged view of the scene provided by the second image module (106).

An advantage with the present invention is that the dimensions of a diffractive beam guide can be kept small, thus making the end product compact. Furthermore, as generally no movable parts are necessary, the end product can be kept simple and inexpensive, this making it suitable for a low cost consumer environment.

## Description

### Field of the invention

The present invention relates to an optical arrangement comprising diffractive optics.

### Description of the related art

In using conventional hand-held viewing instruments, the largest useful magnification is restricted by the difficulty experienced by a user holding such handheld instruments sufficiently stable. The slightest shaking movement of the instrument causes the image viewed by the user to shake. In the case of high degrees of magnification, the shaking movements affect the image to such an extent that as to make perception thereof difficult. Hand-held viewing instruments therefore are rarely used for magnification above ten, and a magnification of seven or eight is common for practical purposes. When viewing instruments are used to view objects that appear small against a large background, such as birds or airplanes against the sky, high-magnification instruments may make it difficult to find the objects one wishes to study. High magnification reduces the field of vision.

WO 98/26321 provides a solution to this problem, in which an instrument with the possibility of freezing the instrument-produced image is disclosed. The frozen image may then be studied without inconvenience, even if the instrument itself is subjected to shaking movements. The technique provides the user with the possibility of studying the frozen image in detail under larger magnification. To find the object to be viewed, the viewer uses a low degree of magnification, which provides the user with an overview of the scene. Thereafter, as soon as the user viewer has found the object of interest and preferably centered it to the centre field of the image, the image can be frozen and studied without being subjected to shaking movements.

However, even though the aforementioned prior art provides high functionality, the solution is relatively high-priced, and thus not suitable for the general consumer.

### Object of the invention

Therefore, there is a need for an improved viewing instrument, and more specifically to an improved viewing instrument that overcome or at least alleviates the cost problems according to prior art.

### Summary of the invention

According to an aspect of the invention, the above object is met by an optical arrangement, comprising a viewfinder for receiving an eye of a user, and a waveguide comprising a first in-coupling interface connected to an out-coupling interface of a first image module providing an overview of a scene, a second in-coupling interface connected to an out-coupling interface of a second image module providing an enlarged view of the scene, and an out-coupling interface connected to the viewfinder, wherein light emitted by said first and second images sources are diffracted by the respective in-coupling interfaces of the waveguide, propagated through the waveguide via total internal reflection, and diffracted out of the out-coupling interface of the waveguide and into the viewfinder, and wherein one of the first and the second image module are activated at a time, thereby allowing a user of the optical arrangement to selectively switch the view provided through the viewfinder between the overview of the scene provided by the first image module and the enlarged view of the scene provided by the second image module.

The present invention is based on the understanding that it is possible to use a diffractive optical beam guide to couple two different image sources, thus allow a user to view a scene through a common viewfinder, and selectively switch between the different image sources such that the different views of the scene is visible. That is, each of the image sources preferably comprises means for selectively turning on and off the different image sources, where preferably only one image source is turned on at a time. Diffractive optics are known in the art and are found, e.g., in US2006/0170615. The expression "overview of a scene" is understood to in the context of the present invention mean a representation of a scene at a low magnification level. Similarly, the expression "enlarged view of a scene" is understood to mean a representation of a scene at a high magnification level in relation to the low magnification level for the overview of the scene.

An advantage with the present invention is that the dimensions of a diffractive beam guide can be kept small, thus making the end product compact. Furthermore, as generally no movable parts are necessary, the end product can be kept simple and inexpensive, this making it suitable for a low cost consumer environment.

In a preferred embodiment, the first image module is a telescope module providing a first predetermined magnification of the scene, and the second image module is a camera module providing a second predetermined magnification of the scene, the first magnification being lower than the second magnification. However, it is also possible, and within the scope of the invention, to arrange both the first and the second image modules as the same type of image modules, e.g. two telescope modules or two camera modules. It is also possible to use more than two image modules, e.g. two telescope modules and one camera module (i.e. by means of additional in-coupling surfaces).

Using the combination of a telescope module and a camera module allows for the user to in a first mode, a telescope mode, follow an object of interest that is visible in the overview of the scene, and then in a second mode, a camera mode, capture, store and view enlarged views of the object of interest.

Preferably, the camera module adapted to provide an enlarged viewable representation of the scene comprises means for adjusting the magnification level of the enlarged view. That is, it is desirable that the camera module comprises for example an adjustable optical zoom for providing different magnification levels of the enlarged view. It is possible to use either a motorized zoom or a manual zoom.

In a preferred embodiment of the invention, the at least one of the first image module and the second image module is detachably connected to the optical arrangement. Such arrangements provides for the possibility to use different types of attachable modules, such as for example different types of already available camera modules, and attach the already available camera module to the optical arrangement according to the present invention. As such, it is possible to for example attach a digital pocket camera, a system camera, or a mobile telephone having camera capability to the optical arrangement. However, it is also possible to integrate both of, or at least one of, the image sources with the optical arrangement according to the present invention.

In an embodiment of the invention, the camera module further comprises communication circuitry and an antenna providing wireless communication between the camera module and another electronic unit. Such an arrangement is especially useful when the user transfers a captured image between the camera module and an externally arranged electronic unit, for example in the form of a laptop or a personal computer.

The optical arrangement can also comprise a control unit for controlling the operation of the camera module, and possibly also communication circuitry and an antenna for providing wireless communication between the camera module and the externally arranged electronic unit. When using a mobile telephone, it is possible to use the built in communication circuitry and antenna for providing wireless communication with the external electronic unit.

Using the digital camera of a mobile phone instead of a regular digital camera has further advantages, for example there is no need for an extraordinary camera, which comprises wireless communication possibilities. Instead, the existing circuitry and camera functionality of the mobile phone can be utilized. For the end consumer this can be better, as camera equipped mobile phones are commonly available, thus resulting in a less expensive end product. In the case of the camera module being a mobile phone comprising a digital camera it might be useful to have the additional lens system adapted to compensate for the potential down scaling commonly performed by the mobile phone camera.

Preferably, the optical arrangement additionally comprises a digital storage unit for storing digital images captured by the image sensor. Such a digital storage unit may be an USB or a flash memory card, e.g. CompactFlash, Memory Stick, Secure Digital etc.

Also, an image sensor of the camera module is preferably selected to be for example a CMOS or a CCD image sensor. The image sensor used may however depend on the cost segment, where the CMOS sensor generally is cheaper but than also potentially, presently, provide a result having lower quality than a CCD sensor. It is also possible, and within the scope of the invention, to use an over dimensioned image sensor which generates an image that is over dimensioned in relation to the display. Then, when studying the enlarged view of the scene, it will be possible to tilt and pan, still being provided with the same high resolution image. The camera module can also comprise means for allowing digital zoom.

Preferably, the camera module comprises a display screen representing the out-coupling interface of an image module, and the display screen is arranged to coincide with one of the in-coupling interfaces of the waveguide. That is, it is possible to directly, or with some minor adjustments arrange the display screen adjacent to one of the in-coupling interfaces of the waveguide, and then when turning on the camera module (and/or activating the display screen), an image visible on the display screen will be visible through the viewfinder. The display screen is preferably one of a liquid crystal display (LCD), an organic light emitting diode array (OLED), or any other similar screen-projected display.

However, as there is a search to increase the display screen size of a digital camera, it can be necessary to arrange the in-coupling interface of the waveguide coinciding with the display screen of the camera module to comprise a minification portion for minifying an image visible on the display screen to accommodate the out-coupling interface of the waveguide. Such a minification portion allows the image visible on the display screen to be minified such that it fits the image being out-coupled through the viewfinder. Further discussions relating to the minification portion is given below.

The optical arrangement according to the present invention is preferably, but not exclusively, arranged as a component in an optical system, e.g. a binocular system. In such an embodiment, the optical system further comprises a second viewfinder, wherein the out-coupling interface of the waveguide is connected to an in-coupling interface of a second waveguide for dividing and propagating the image received by the second waveguide to two out-coupling interfaces, each of the out-coupling interfaces connected to the viewfinder and the second viewfinder, respectively. Such a system allows for a user to arrange each of his/hers eyes to coincide with a respective viewfinder, and allows for the user to use both of his/hers eyes to follow an object of interest in the overview of the scene, and provides for a detailed study of the object of interest in the enlarged view of the scene. This combination of two viewfinders allows for the optical system to be used as a pair of binoculars with a photographing function, potentially providing a better "tracking" when in the overview mode.

As stated above, each of the viewfinders are preferably arranged to coincide with the eyes of the user of the optical system. Therefore, the optical system preferably includes an interpupillary distance adjustment mechanism to accommodate multiple users. Accommodation for vision correction and a focus mechanism may also be provided.

### Brief description of the drawings

These and other aspects of the present invention will now be described in more detail, with reference to the appended drawings showing currently preferred embodiments of the invention, in which:
Figure 1 is a conceptual block diagram of an optical arrangement according to an embodiment of the present invention;
Figure 2 is a conceptual block diagram of an optical set-up for dividing an image from an image source to two different viewfinders;
Figure 3 shows a conceptual block diagram of an optical system according to an embodiment of the present invention arrangement comprising an optical arrangement and an optical set-up;
Figure 4 shows an optical device for minifying an image from an image source; and
Figure 5 shows a camera module detachably connected to an optical arrangement according to the present invention.

### Detailed description of currently preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

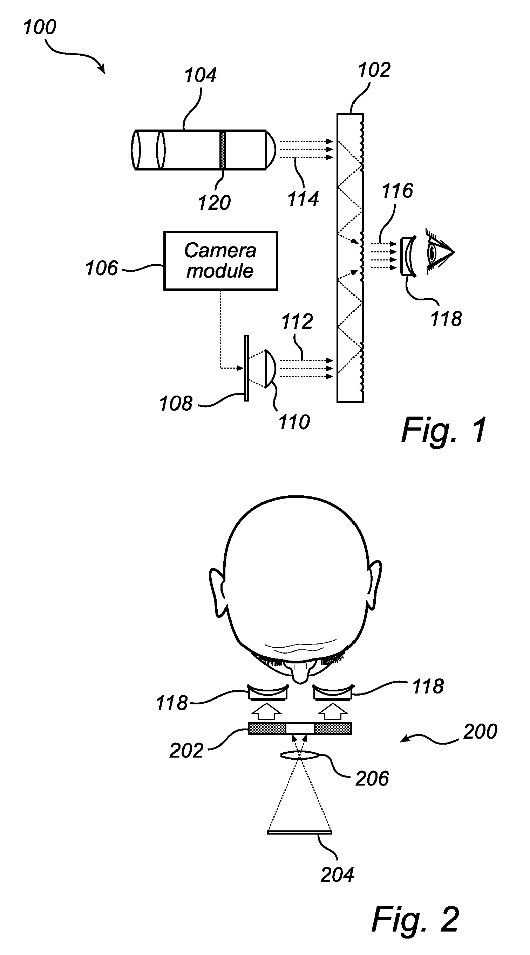

Referring now to the drawings and to figure 1 in particular, there is depicted a conceptual block diagram of an optical arrangement 100 according to an embodiment of the present invention. The optical arrangement 100 comprises a waveguide in the form of a diffractive beam guide 102 adapted to receive light from two image sources, the first image source being a telescope module 104 providing an overview image of a scene, and the second image source being a camera module 106 providing an enlarged image of the scene. The telescope module 104 generally comprises a complex lens system including a plurality of lenses. However, the skilled addressee understands that different lens arrangements are possible, and within the scope of the invention. Also, the diffractive beam guide 102 is preferably of flat dimensions, providing for the possibility to construct compact optical arrangements.

The overview of the scene can be provided at a low magnification level, for example predetermined to be around four times, and the enlarged view of the scene can for example be predetermined to have a magnification level around 16 times. It would also be possible to use different magnification levels. However, the overview view of the scene should preferably be kept to less than six times magnification, as a higher magnification level will be sensitive to shaky movements. The camera module 106 captures at least one of a digital image and a video sequence using an image sensor (not shown), for example a CCD or a CMOS sensor. The camera module 106 is preferably arranged to overlook the same scene as the telescope module 104.

For providing the image from the camera module 106 to the diffractive beam guide 102, an image captured by the image sensor of the camera module 106 is displayed onto a display screen 108, for example a LCD, from which it is optionally focused (using a lens system 110) towards an in-coupling surface of the diffractive beam guide 102, indicated by the arrows 112. Similarly, an image "captured" using the telescope module 104 is provided, indicated by arrows 114, to another in-coupling surface of the diffractive beam guide 102. The in-coupling surfaces of the diffractive beam guide 102 is adapted to guide light from the respective in-coupling surfaces by means of total internal reflection, to an out-coupling surface of the diffractive beam guide 102, where it will be provided, indicated by arrows 116, to a viewfinder in the form of an ocular 118.

Generally, the in-coupling surfaces and the out-coupling surface of the diffractive beam guide 102 can comprise gratings, and the redirection of light is generally by the diffraction phenomenon. Thus, for example, when both the in-coupling surfaces and the out-coupling surface of the beam guide 102 are diffractive elements, the in-coupling surfaces diffracts the light into a substrate of the beam guide 102 such that at least a few light rays experience total internal reflection and propagate within the beam guide 102, and the out-coupling surface diffracts at least a few of the propagating light rays out of substrate of the beam guide 102.

The term "diffracting" as used herein, refers to a change in the propagation direction of a wavefront, in either a transmission mode or a reflection mode. In a transmission mode, "diffracting" refers to change in the propagation direction of a wavefront while passing through the diffractive element; in a reflection mode, "diffracting" refers to change in the propagation direction of a wavefront while reflecting off the diffractive element in an angle different from the basic reflection angle (which is identical to the angle of incidence). The beam guide 102 can be made of any light transmissive material.

For not viewing both images at the same time, even though it is possible, the telescope module 104 and the camera module 106 are selectively switched on, only one image source at a time. As the camera module 106 is electrically controlled, the camera module 106 is simply switched off, or arranged in an idle state; alternatively the display screen 108 is turned off. In regards to the telescope module 104, the telescope module 104 generally does not comprise any electrically driven components. However, for blocking the image captured by the telescope module 104, the telescope module 104 may comprise a Liquid Crystal Spatial Light Modulator (LC SLM) 120 which is electrically controlled and allows for the light from the telescope module 104 to be blocked out. Similar components are possible and within the scope of the invention. It should be noted that the display screen 108 can be integrated with the camera module 106.

For the control of the optical arrangement 100, the optical arrangement 100 preferably comprises a control unit (not shown) for controlling the functionality and the operation of the optical arrangement 100. The control unit can be adapted to control the camera module 106, the LC SLM 120 and for controlling the storage and transmission of images captured using the camera module 106. In the case that the camera module 106 comprises a motorized lens, the control unit can control the lens and provide focus information for focusing the image captured using the camera module 106. The control unit may include a microprocessor, a microcontroller, a programmable digital signal processor or another programmable device. The control unit may also, or instead, include an application specific integrated circuit (ASIC), a programmable gate array programmable array logic, a programmable logic device, or a digital signal processor. Where the control unit includes a programmable device such as the microprocessor or microcontroller mentioned above, the processor may further include computer executable code that controls operation of the programmable device.

The optical arrangement 100 preferably comprises means for switching between the image sources 104, 106. Such means, for example a button or a switch, is preferably connected to the control unit. Furthermore, the overview of the scene visible through the telescope module 104 is optionally provided with a crosshair, or similar, for indicating the center of the overview. Thus, when in overview mode, the user may "aim" the crosshair at a point in the scene that is of interest, and then switch image source to the camera module 106, i.e. to the enlarged mode, where an area will be displayed having the same center as the crosshair had in the overview of the scene.

Also, the optical arrangement 100 can comprise storage means for storing the images/video sequences captured using the camera module 106, and be provided with communication means for transmitting captured images and video sequences to an external unit, for example in the form of a portable or stationary computer, such as a laptop, a Personal Digital Assistant (PDA), or a desktop. The transmission may be wired or wireless, including for example wired connections like USB, FireWire, VGA, or similar, and wireless connections like WLAN, Bluetooth, infrared, or similar. As discussed above, it is possible, and within the scope of the invention, to use an already existing digital camera, e.g. a digital pocket camera, a digital system camera, or a mobile phone having camera capability. Using a mobile phone, it is also possible to use the inbuilt mobile functionality, for example using mobile transmission means (e.g. CDMA, GSM, 3G, or similar), to transfer the captured image to a remotely located electronic unit, for example a remote server.

Turning now to figure 2, illustrating an optical set-up 200 for dividing an image from an image source to two different viewfinders. Similar to figure 1, the optical set-up comprises viewfinders in the form of oculars 118 that receives light coupled out from a waveguide 202. Conversely to the diffractive beam guide 102 in figure 1, the waveguide 202 comprises a single in-coupling surface and two out-coupling surfaces. That is, an image provided by for example a display screen 204 will be focused, using optional lens system 206, onto the in-coupling surface of the waveguide 202 and then divided and displayed to the two eyes of the user by means of the oculars 118.

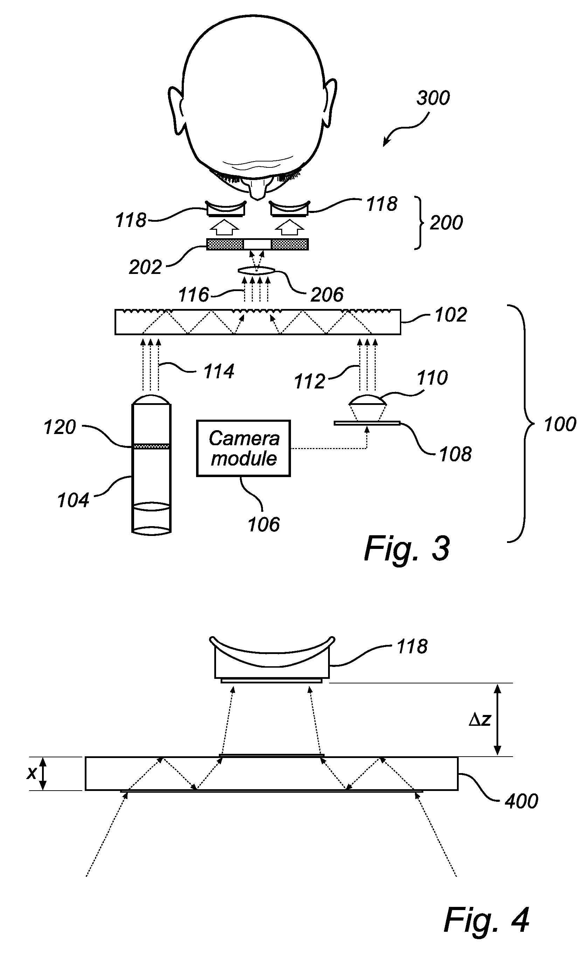

In figure 3 there is provided an optical system 300 comprising an optical arrangement 100 according to the present invention, and an optical set-up 200 as discussed above. In the optical system 300, an image captured by either of the telescope module 104 or the camera module 106 will be possible to view by both eyes of the user. Instead of as in figure 1 focus the light transmitted through the out-coupling surface of the diffractive beam guide 102 to a single ocular 118, the light is focused using optionally lens system 206 to the in-coupling surface of the waveguide 202, wherein the light is allowed to be coupled to both the eyes of the user using two oculars 118.

Figure 4 illustrates a minification beam guide 400 for minifying (i.e. conversely to magnifying) an image. The minification beam guide 400 on one side comprises an in-coupling surface where a large display screen may be received. On the other side of the minification beam guide 400, there is arranged an out-coupling surface which is positioned adjacent to a viewfinder, for example ocular 118. In operation, light representative of an image visible on the large display screen will impinge on the in-coupling surface of the minification beam guide 400, and through internal reflection be minified and out-coupled at a size suitable for the ocular 118. Such a minification beam guide 400 is useful in an optical arrangement 100 or an optical system 300 according to the invention when using a camera module 104 being connected to a large display screen 108, or a camera module 104 having a large integrated display screen 108. The thickness x of the minification beam guide 400 is preferably from about 0.1 mm to about 5 mm, more preferably from about 1 mm to about 3 mm, even more preferably from about 1 to about 2.5 mm. For multicolor use, the thickness x is preferably selected to allow simultaneous propagation of a plurality of wavelengths. The distance between the out-coupling surface of the minification beam guide 400 is preferably from about 15 millimeters to about 35 millimeters, but can be adapted such that an optical arrangement or an optical system comprising minification beam guide 400 can be made more compact. Similar proportions are valid for the beam guide 102 and the waveguide 202. The minification beam guide 400 is also useful with a binocular system as is disclosed in European Patent Application 07116162, assigned to the applicant of the present invention.

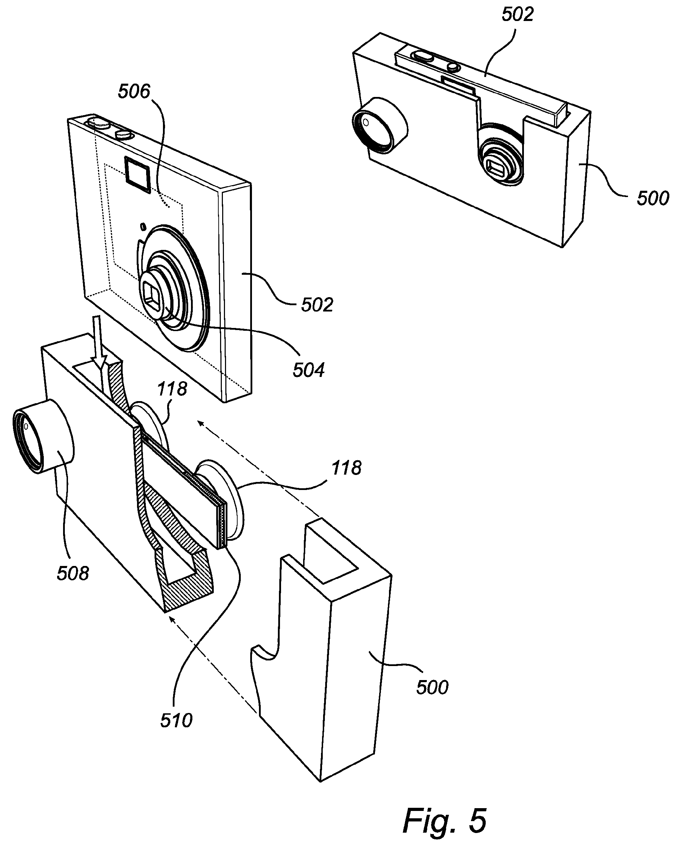

In figure 5 there is shown an alternative optical arrangement 500, comprising a digital camera 502 comprising optics 504 arranged on the front of the camera 502, and a display screen 506 on the back of the camera. In the present embodiment, the camera 502 is detachably connected to the optical arrangement 500, i.e. the optical arrangement 500 can be provided as an accessory to the digital camera 502. Similar to figure 3, two oculars 118 are provided for allowing a user to selectively view an image from one of the image sources, i.e. the digital camera 502 or an image captured using a telescope module 508. For combining images from the different image sources, a layered optical structure 510 is provided, where a diffractive beam guide 102 has been combined with a waveguide 202. The diffractive beam guide 102 and the waveguide 202 can be combined using stacking, wherein the different light guides 102, 202 are arranged on top of each other, and optionally having a non-transparent layer arranged between each other. However, the in-coupling surface of the waveguide 202 and the out-coupling surface of the beam guide 102 are not covered by a non-transparent layer but instead adapted to interact with each other, i.e. the light emitted by the out-coupling surface of the beam guide 102 is essentially completely received by the in-coupling surface of the waveguide 202.

The skilled addressee realizes that the present invention by no means is limited to the preferred embodiments described above. On the contrary, many modifications and variations are possible within the scope of the appended claims. For example, it is possible to provide the optical arrangement, the optical system, or the camera module with night vision capability, thereby allowing for the possibility to better view objects in dimly lit or night environment. Furthermore, the digital still images captured using the camera module can be processed and enhanced using different digital image processing methods known in the art, preferably by means of the control unit comprised in the optical arrangement according to the present invention. It would also be possible to equip the camera module with an oversized image sensor. When using an oversized image sensor, the camera module captures a digital image that is larger then what is possible to display on the display screen. This allows for the possibility to pan and tilt in the enlarged view of the scene. In an exemplary embodiment the display screen is arranged to display a digital image having a size of 640 times 480 pixels, and the image sensor is able to capture a digital image having a size of 5120 times 3840 pixels, i.e. the image sensor can capture eight times the image information that is viewable on the display screen.

Also, according to an alternative but related embodiment, the first and the second image modules provides the same enlarged view of the scene, the first and the second image modules are turned on at the same time and provides the same enlarged view of the scene, and the waveguide is divided into two sections where each section is connected to a respective viewfinder, thereby making it possible to manufacture a compact binocular system.

## Claims

1. An optical arrangement (100), comprising:
- a viewfinder (118) for receiving an eye of a user; and
- a waveguide (102) comprising:
- a first in-coupling interface connected to an out-coupling interface of a first image module (104) providing an overview of a scene;
- a second in-coupling interface connected to an out-coupling interface of a second image module (106) providing an enlarged view of the scene; and
- an out-coupling interface connected to the viewfinder (118), wherein light emitted by said first and second images sources (104, 106) are diffracted by the respective in-coupling interfaces of the waveguide (102), propagated through the waveguide (102) via total internal reflection, and diffracted out of the out-coupling interface of the waveguide (102) and into the viewfinder (118), and wherein one of the first and the second image module (104, 106) are activated at a time,
thereby allowing a user of the optical arrangement (100) to selectively switch the view provided through the viewfinder (118) between the overview of the scene provided by the first image module (104) and the enlarged view of the scene provided by the second image module (106).

2. Optical arrangement (100) according to claim 1, wherein the waveguide (102) is a diffractive beam guide.

3. Optical arrangement (100) according to claim 1 or 2, wherein at least one of the first image module (104) and the second image module (106) is a telescope module.

4. Optical arrangement (100) according to claim 1 or 2, wherein at least one of the first image module (104) and the second image module (106) is a camera module.

5. Optical arrangement (100) according to claim 1 or 2, wherein the first image module is a telescope module (104) providing a first predetermined magnification of the scene, and the second image module is a camera module (106) providing a second predetermined magnification of the scene, the first magnification being lower than the second magnification.

6. Optical arrangement (100) according to claim 4, wherein the camera module (106) is adapted to provide an enlarged viewable representation of the scene comprises means for adjusting the magnification level of the enlarged view.

7. Optical arrangement (100) according to any one of the preceding claims, wherein at least one of the first image module (104) and the second image module (106) is detachably connected to the optical arrangement (100).

8. Optical arrangement (100) according to any one of claims 4 - 7, wherein the camera module (106) is detachably connected to the optical arrangement (100).

9. Optical arrangement (100) according to any one of claims 4 - 8, further comprising a control unit for controlling the operation of the camera module (106).

10. Optical arrangement (100) according to any one of claims 4 - 9, wherein the camera module (106) comprises communication circuitry and an antenna for providing wireless communication between the camera module (106) and externally arranged electronic unit.

11. Optical arrangement (100) according to any one of claims 4 - 10, wherein the camera module (106) is a mobile telephone comprising a digital camera.

12. Optical arrangement (100) according to any one of claims 4 - 11, wherein the camera module (106) is connected to a display screen (108) representing the out-coupling interface of the image module, and the display screen (108) is arranged to coincide with one of the in-coupling interfaces of the waveguide (102).

13. Optical arrangement (100) according to claim 12, wherein the in-coupling interface of the waveguide (102) coinciding with the display screen (108) of the camera module (106) comprises a minification portion (400) for minifying an image visible on the display screen (108) to accommodate the out-coupling interface of the waveguide (102).

14. Optical system (300, 500), comprising an optical arrangement (100) according to any one of claims 1 - 13 and a second viewfinder (118), wherein the out-coupling interface of the waveguide (102) is connected to an in-coupling interface of a second waveguide (202) for dividing and propagating the image received by the second waveguide (202) to two out-coupling interfaces, each of the out-coupling interfaces connected to the viewfinder (118) and the second viewfinder (118), respectively.
